# EUROPÄISCHE PATENTSCHRIFT

(11) **EP 2 281 424 B1**
(45) Veröffentlichungstag und Bekanntmachung des Hinweises auf die Patenterteilung: **31.07.2013**
(21) Anmeldenummer: 10167511.4
(22) Anmeldetag: 28.06.2010
(51) Int. Cl.: A01B 27/00, A01B 29/04

(54) **Bodenbearbeitungsvorrichtung**
Soil cultivation device
Dispositif de travail de sol

(30) Priorität: 08.07.2009 DE 102009032373
(43) Veröffentlichungstag der Anmeldung: 09.02.2011
(73) Patentinhaber: Kongskilde-Howard Innovation GmbH, 29683 Fallingbostel (DE)
(72) Erfinder: Brockmöller, Fritz, 29683 Fallingbostel (DE)
(74) Vertreter: Einsel, Martin

(56) Entgegenhaltungen:
- EP-A1- 0 998 185
- WO-A2-02/082880
- DE-U1- 29 714 274
- US-A- 4 088 195

## Beschreibung

Die Erfindung betrifft eine Bodenbearbeitungsvorrichtung, mit einer horizontalen, drehbaren Welle mit einer Achse, mit einem oder mehreren an der Welle angeordneten Trägerkörpern, mit mehreren sichelförmigen Federarmen, die mit einem Endabschnitt in oder an dem Trägerkörper befestigt sind und mit dem anderen Endabschnitt ein freies Ende bilden, wobei der an das freie Ende angrenzende Abschnitt einen Teil eines Umkreises um die Achse bildet und federnd nachgiebig ist.

Derartige Bodenbearbeitungsvorrichtungen dienen insbesondere in der Landwirtschaft für das Verfestigen und Vorbereiten von Böden. Dies ist etwa beim Vorbereiten des Bodens für das Säen und das Ausbringen von Saatgut von Bedeutung.

In der EP 0 598 311 A2 wird ein Bodenverfestigungsgerät beschrieben, bei dem an einem Maschinenrahmen andere Bodenbearbeitungselemente wie etwa Schare, Scheiben oder Grubber, und außerdem ein Bodenbearbeitungselement in Form eines walzenartigen Stempelgerätes vorgesehen sind. Das Stempelgerät besitzt eine horizontale Achse, an der radial nach außen ragende Stempelwerkzeuge befestigt sind, wobei sich der Querschnitt jedes dieser Stempelwerkzeuge von innen nach außen vergrößert. Die mehreren Stempelwerkzeuge eines jeden Stempelgerätes bilden miteinander eine kreisförmige, jedoch nicht vollständig geschlossene Ablauffläche, wobei die Achse den Mittelpunkt dieses Kreises bildet. Nachteilig ist, dass die Stempelwerkzeuge relativ starr sind, sodass beim Auftreffen eines Stempelwerkzeugs auf einen größeren Erdklumpen oder einen Stein das Gesamtgerät aus seiner gleichmäßigen Vorwärtsbewegung nach oben angehoben wird, wodurch auch die weiteren Bodenbearbeitungsgeräte außer Eingriff mit dem Boden gelangen.

Eine Modifikation eines solchen Gerätes ist aus der WO 02/082 880 A2 bekannt.

In der EP 0 998 185 B1 wird eine Weiterentwicklung eines solchen Bodenverfestigungsgerätes beschrieben, bei der die Stempelelemente durch als Federarme ausgebildete Verdichtungselemente ersetzt oder gebildet werden. Die als Federarme ausgebildeten Verdichtungselemente sind über speichenartig aufgebaute Befestigungsflansche, die hier Trägerkörper für die Federarme bilden, mit einem die Achse festlegenden Rohr verbunden. Der innere Abschnitt eines jeden Federarmes verläuft von dem Befestigungsflansch radial nach außen.

Bei Erreichen des angestrebten Kreisumfanges knickt der Federarm um 90° in einen teilkreisförmigen äußeren Abschnitt ab. Die äußeren Abschnitte bilden die Wirkfläche des Stempelwerkzeuges bei dieser Konzeption und stellen in ihrer Gesamtheit den Umfangskreis dar. Der Kreis ist lediglich an den Stellen unterbrochen, die zwischen zwei verschiedenen Federarmen ausgebildet sind, dies führt dazu, dass beim Überfahren eines auf dem Boden liegenden Hindernisses, beispielsweise eines Steines, der jeweilige äußere Abschnitt des Federarmes, der auf dieses Hindernis auftrifft, federnd nach innen ausgelenkt wird. Dabei ist ein Anschlag auf dem benachbarten Federelement vorgesehen, um zu verhindern, dass die sehr biegsame Feder übermäßig stark ausgelenkt wird und dadurch bricht. Um den umlaufenden, durch die verschiedenen Federarme gebildeten Kreis möglichst vollständig werden zu lassen, ist das Abknicken aus dem radial nach außen strebenden Abschnitt der Federarme in den den Teilkreis bildenden Abschnitt relativ scharf ausgeführt.

Ein ständiges Problem bei derartigen Bodenverfestigungsgeräten besteht darin, dass sich Erdklumpen, sogenannte Gluten, bilden und sich in den Federarmen verfangen, insbesondere innerhalb des Kreisumfanges auf der Innenseite der Federarme. Auch Pflanzenreste sammeln sich dort an. Diese Erdklumpen und sonstigen Elemente erhöhen das Gewicht der Federarme und reduzieren die Elastizität und gefährden bei größeren Mengen auch die Funktionsfähigkeit des Gerätes insgesamt.

In der EP 1 038 423 A1 werden für eine derartige Konzeption zusätzlich zwischen zwei derartige, auf einer Achse angeordnete aus Federarmen gebildete Stempelwerkzeuge noch Kammelemente oder Nivelierelemente eingeschoben.

Diese stehen fest, sodass eine Relativbewegung dieser Kammelemente und der Federarme entsteht. Dadurch soll der Tendenz entgegengewirkt werden, dass sich in und zwischen den Federarmen Erdklumpen, Pflanzenreste und dergleichen festballen und mitgeführt werden und dadurch die Funktionsfähigkeit und auch die Federeigenschaften der Stempelwerkzeuge beeinträchtigt werden.

In der US-PS 4,088,195 wird eine weitere Konzeption beschrieben, bei der von einer Welle mit einem quadratischen Querschnitt vier sichelförmige Federarme nach außen ragend ausgebildet sind. Jeder dieser Federarme geht zunächst in radialer Richtung nach außen und ist an einem Trägerkörper befestigt, der einstückig mit der Welle mit dem quadratischen Querschnitt verbunden ist. Die sichelförmigen Federarme biegen kurz vor Erreichen des Kreisumfanges um und bilden dann gemeinsam den Umkreis um die Achse.

Ein ähnliches Konzept ist auch aus der DE 297 14 274 U1 bekannt.

Trotz des vielfachen Einsatzes derartiger Geräte und ihrer grundsätzlichen Funktionstüchtigkeit besteht der Wunsch nach weiteren Verbesserungsmöglichkeiten.

Aufgabe der Erfindung ist es daher, eine gattungsgemäße Bodenbearbeitungsvorrichtung vorzuschlagen, die solche Möglichkeiten bietet.

Diese Aufgabe wird in der Erfindung bei einer gattungsgemäßen Bodenbearbeitungsvorrichtung dadurch gelöst, dass die sichelförmigen Federarme von der Welle aus in einer von einer radialen Richtung abweichenden Richtung nach außen ragen und im weiteren Verlauf in einer Krümmung in den Abschnitt übergehen, der einen Teil des Umkreises um die Achse bildet, und dass jeder Federarm an seinem Trägerkörper so befestigt ist, dass sein erster Endabschnitt tangential zur Welle oder parallel dazu verläuft.

Die Erfindung macht von der Erkenntnis Gebrauch, dass die bekannten derartigen Geräte eine bisher unbeachtet gebliebene Schwachstelle besitzen. Die Knickstelle beziehungsweise die einen sehr engen Radius aufweisende Übergangsstelle von den von der Achse radial nach außen strebenden inneren Abschnitten zu der den äußeren Kreisumfang bildenden und dem freien Ende benachbart liegenden äußeren Abschnitten der Federarme unterliegt einer Bruchgefahr. Darüber hinaus begrenzt seine Ausbildung auch die technischen Eigenschaften des Federarmes insgesamt.

Geht nämlich der innere Abschnitt des Federarms radial aus dem Achsbereich nach außen zum Umfang des Kreises, so werden von außen in diesem Bereich in den Federarm eingetragene Kräfte ähnlich wie bei der Speiche eines Rades in dem Federarm in seiner Längsrichtung zur Achse weitergetragen. Das bedeutet, dass die federnden Eigenschaften des Federarmes gar nicht genutzt werden, denn diese Eigenschaften kommen ja nur zur Geltung, wenn der Federarm aus seiner Ruhelage ausgelenkt wird und sich federelastisch zurückbegeben möchte. In seiner Längserstreckung ist ein solcher Federarm nicht elastisch, da seine Dehnungseigenschaften natürlich begrenzt sind.

Damit werden die elastischen, federnden Eigenschaften des Federarms nur von dem den Teilkreis bildenden Abschnitt in der Praxis einsetzbar und somit drastisch verkürzt und reduziert.

Ein relativ aufwändiger Versuch, auch eine Federeigenschaft in diesen speichenähnlichen Bereichen der Federarme zu erhalten, ist in der WO 02/082880 A2 beschrieben. Der dort erforderliche Aufwand zur Erzielung der elastischen Eigenschaften auch in der Längserstreckung der Federarme ist natürlich sehr erheblich und damit unwirtschaftlich.

Die Erfindung umgeht nun auf sehr geschickte Weise diese aufwändige Konstruktion, indem sie komplett den problematischen Bereich des Verbindens der kreisförmigen Abschnitte des Federarms mit der Achse anders gestaltet.

Dadurch wird vollständig vermieden, dass Kräfte in einen speichenähnlichen Abschnitt des Federarms übertragen werden müssen, da es nur noch Abschnitte des Federarms gibt, die bei einer Belastung von außen aus ihrer Ruhelage ausgelenkt werden.

Dies wird erreicht, indem der Federarm gar nicht radial vom Mittelpunkt des Kreises, also von der Achse, nach außen geführt wird, sondern bereits mit einem relativ großen Radius, wobei der entsprechende Endabschnitt selbst auch nicht senkrecht auf der Achse steht, sondern stattdessen tangential am Trägerkörper befestigt ist.

Auf diese Weise entsteht eine deutliche Vergleichmäßigung der verschiedenen Radien des Federarms. Gewissermaßen kontinuierlich vergrößert sich der auch im innersten Bereich bereits relativ große Radius nach außen, bis er schließlich den angestrebten Kreisradius erreicht. Enge Abbiegungen oder gar Knicke werden vollständig vermieden. Die Krümmungsrichtung des Federarms ist auch über seinen gesamten Verlauf bevorzugt die gleiche. Sie wechselt auch nicht.

Damit gibt es weder einen besonders belasteten noch einen besonders empfindlichen Abschnitt des Federarms, der dadurch eine längere Lebensdauer erfährt.

Da nun außerdem kein besonders weicher elastischer Federstahl eingesetzt werden muss, um die scharfe Biegung am Übergang überhaupt gewährleisten zu können, kann als Werkstoff für den Federarm ein Material eingesetzt werden, das einer Biegung größeren Widerstand entgegensetzt, wodurch trotzdem die gleiche federnde Wirkung entsteht, denn es steht ja auch eine größere Länge zum Abtragen der auf den Federarm wirkenden Kräfte zur Verfügung.

Als weitere Möglichkeit ergibt sich durch die nur noch wenige Abweichungen im Krümmungsgrad aufweisende Konzeption des Federarms die Möglichkeit, auch in gewissem Rahmen profilierte Federarme einzusetzen, also solche, die quer zu ihrer Längserstreckung nicht flach beziehungsweise rechteckig ausgebildet sind, sondern auch davon abweichende Profile besitzen.

Bevorzugt wird als Werkstoff für die Federarme ein Federstahl eingesetzt. Dieser lässt sich besonders gut bearbeiten und weist auch die entsprechenden Federeigenschaften und Biegungswiderstände auf.

Die Zahl der Federarme, die jeweils miteinander einen Kreisring bilden, ist anders als im Stand der Technik vielfältiger. Während die relativ weichen und biegsamen Federarme, die bisher zur Erzielung des Federeffektes erforderlich waren, weitgehend zwingend den Einsatz von vier Federarmen zur Bildung eines Kreises erforderten, kann jetzt erfindungsgemäß sogar ein einziger Federarm bereits den gesamten Kreis bilden. Das freie Ende erreicht dann einen Bereich, in dem der selbe Federarm gerade mit seinem großen Biegungsradius den äußeren Kreisumfang erreicht. Die Abstände können größer sein als im Stand der Technik, da die Federarme weniger biegsam sein müssen und diese Toleranzen an den "Lücken" beziehungsweise freien und nicht mit einem Federarm belegten Teilen des Kreises genutzt werden können.

Besonders bevorzugt ist es, wenn die Federarme so ausgelegt sind, dass zwei Federarme einen fast geschlossenen Ring bilden. Dies hat sich in Tests als besonders effektiv herausgestellt und ermöglicht auch ein besonders einfaches und quasi selbstreinigendes Entfernen von Gluten und Erdklumpen, die sich während des Abrollens auf dem Erdboden festzusetzen versuchen.

Von besonderem Vorteil ist es, wenn von mehreren in Achsrichtung nebeneinander angeordneten Federarmen mehrere gruppenweise nebeneinanderliegende Federarme eine Befestigungsmöglichkeit zur Verbindung der gruppenweise benachbarten Federn aufweisen.

Diese Befestigungsmöglichkeit kann insbesondere mittels einer stabähnlichen Verbindung konkretisiert werden. Der Stab verbindet dann die Gruppe von Federarmen parallel zur Achse. Diese stabähnliche Verbindung steht damit ebenso wie die Achse quer zur Fahrtrichtung beziehungsweise Bewegungsrichtung der gesamten Bodenbearbeitungsvorrichtung.

Das hat zur Folge, dass nicht nur die Stabilität der Federarme gerade in diesem Bereich zusätzlich unterstützt wird und diese sich gegenüber einem auftretenden Hindernis etwa in Form eines Steines besser stabilisieren, sondern durch das Eindrücken in den Boden während der Vorwärtsbewegung der walzenähnlichen Bodenbearbeitungsvorrichtung entsteht eine verbesserte Traktion, ähnlich etwa Spikes bei Reifen.

Von weiterem Vorteil ist es, wenn gruppenweise miteinander verbundene Federarme relativ zur nächsten Gruppe verbundener Federarme um 90° relativ zur Achse versetzt sind.

Gerade bei stabähnlichen Verbindungen führt dies zu um 90° versetzten spikeähnlichen Effekten und damit zu einer weiteren Verbesserung und auch Vergleichmäßigung der Traktion betrachtet über den Umfang der walzenähnlichen Bodenbearbeitungsvorrichtung.

Dabei ist es besonders bevorzugt, wenn jede Gruppe verbundener Federarme aus zwei verbundenen Federarmen besteht, die ein Paar bilden. Möglich ist es jedoch auch, dass jede Gruppe aus drei oder vier oder auch aus einer anderen Zahl verbundener Federarme besteht oder dass die Gruppen voneinander abweichende Anzahlen von Federarmen besitzen.

Der Vorteil von einer Verbindung von zumindest paarweise je zwei Federarmen, die in Achsrichtung nebeneinander angeordnet sind, besteht in einer sehr großen Stabilität trotzt der verbleibenden Flexibilität der Federarme.

Dieser Vorteil verstärkt sich noch, wenn dann die nächsten Paare von miteinander verbundenen Federarmen um 90° versetzt sind, wobei diese 90° als Drehung um die Achse verstanden werden könnten.

Wenn die Federarme beziehungsweise die Gruppen der Federarme zueinander um 90° oder gegebenenfalls auch um einen anderen Winkel versetzt sind, so hat dies zur Folge, dass auf dem Boden beim Abrollen der Walze mit den zahlreichen längs der Achse angeordneten Federarmen jeweils unterschiedlich federelastische Abschnitte der jeweiligen Federarme auf den Boden aufliegen. Neben einem relativ weichen Endabschnitt kommt dann ein etwas mehr Widerstand leistender Abschnitt zu liegen. Das bedeutet, dass diese verschiedenen Bereiche in Achsrichtung unterschiedlich nachgiebig gegenüber Hindernissen im Boden sind und verschieden weit eindrückbar sind. Dies fördert ein Lösen und Selbstreinigen von festbackenden Pflanzenresten und Erdklumpen und vereinfacht auch das Überrollen von Steinen und anderen Hindernissen, die seitlich verdrängt werden können.

Es entsteht insgesamt ein unempfindliches und besonders langlebiges Element einer Bodenbearbeitungsvorrichtung. Die Bodenbearbeitungsvorrichtung kann im Übrigen wie auch im Stand der Technik beschrieben darüber hinaus Schare, Scheiben oder Grubber besitzen. Es ist möglich, im Hinblick auf die ausgezeichneten Selbstreinigungseigenschaften aber nicht erforderlich auch hier Kammelemente zwischen Federarmen oder Paaren von Federarmen anzuordnen. Auf Grund der gut federnden und Abstände zulassenden Federarme eines jeden Ringelementes ist die Selbstreinigung unproblematisch. Gluten und Erdklumpen fallen von selbst aus der Bodenbearbeitungsvorrichtung heraus. Darüber hinaus ist keine Abstützung des Endes eines Federarms auf einem anderen Federarm mehr erforderlich, da die Elastizität des Federarmes ein freies Schwingen ohne Weiteres erlaubt, da auch eine längere Erstreckung möglich ist.

Da durch das erfindungsgemäße Konzept der Selbstreinigungseffekt deutlich verbessert wird und die Klumpenbildung reduziert ist, kann mit großem Vorteil der Abstand der Ringsegmente in Achsrichtung reduziert werden. Die Ringsegmente beziehungsweise die Federarme können enger nebeneinander in Achsrichtung platziert werden.

Dadurch wird es anders als im Stand der Technik möglich, die Ringsegmente in einem Abstand von 125 Millimeter in Achsrichtung gesehen nebeneinander zu platzieren. Dies passt ausgezeichnet zu heute üblichen Abständen von Drillmaschinen bezüglich der einzelnen Saatspuren. Es ist also eine Anpassung der Bodenbearbeitungsvorrichtung an die weiteren Elemente des Gesamtkonzeptes möglich.

Die Federbreite beziehungsweise die Breite eines Blattes eines Federarmes kann beispielsweise 45 Millimeter betragen. Dieses ist ein gut verfügbares Material, da in einer Breite von 45 Millimetern auch andere blattähnliche Stahlqualitäten für landwirtschaftliche Geräte benötigt und erzeugt werden. Dadurch werden die Kosten reduziert, da keine Spezialanfertigungen erforderlich sind.

Im Übrigen kann aber die Blattbreite der Federarme auch variiert werden. Es ist durchaus möglich, etwa bodenabhängig oder auch unter Berücksichtigung bestimmter vorherrschender Witterungsverhältnisse in bestimmten Landstrichen andere, abweichende Blattbreiten der Federarme vorzusehen und diese durch entsprechende Trägerkörper ebenfalls montierbar zu halten. Die Blattbreite kann damit auf die Bedingungen der Oberfläche des zu bearbeitenden Bodens sauber abgestimmt werden.

Als weiterer Vorteil kann vorgesehen werden, dass die Federarme austauschbar sind. Es können dann nicht nur Wartungs- und Reparaturarbeiten einfach vorgenommen werden, sondern mehr noch, es können unterschiedliche Federarme eingesetzt werden, die mit ein und derselben Bodenbearbeitungsvorrichtung einen anderen Walzendurchmesser und damit eine Anpassung an andere Geländeformen oder andere Einsatzgebiete ermöglichen.

Da durch die Länge des Federarms, der eine Blattfeder darstellt, die Federkraft zum freien Ende hin geringer wird, kann bei einem größer werdenden Radius die Kraft, die ein Federarm auf den Boden ausübt, erhöht werden.

Darüber hinaus überschreitet nach dem Austreten aus dem Boden bei einer weiteren Drehung der walzenartigen Gesamtkonzeption um die Achse das Ende des Federarms den Walzenradius. Dieses führt zu einem hervorragenden Selbstreinigungseffekt. Das Ende des Federarms und das Ende des benachbarten Federarms besitzen an dieser Stelle dann einen unterschiedlichen Radius betrachtet relativ zur Walzenmitte. Bei paarweise verbundenen Federarmen entsteht dieser unterschiedliche Radius dann zu dem benachbarten Federarmpaar.

Durch das weite Ausgreifen der von dem Trägerkörper bis nach außen gebogenen Federarme entsteht auch eine Beweglichkeit des Federarmes am freien Ende im gewissen Umfange in alle Richtungen, also auch innerhalb der Blattebene des Blattfederelementes.

Im Folgenden werden anhand der Zeichnung Ausführungsbeispiele der Erfindung näher erörtert. Es zeigen:
- **Figur 1**: eine perspektivische, schematische Ansicht einer erfindungs- gemäßen Bodenbearbeitungsvorrichtung;
- **Figur 2**: eine Draufsicht auf die Bodenbearbeitungsvorrichtung aus Figur 1 in Achsrichtung;
- **Figur 3**: eine Seitenansicht der Bodenbearbeitungsvorrichtung aus Figur 1;
- **Figur 4**: einen schematischen Schnitt durch eine erfindungsgemäße Bodenbearbeitungsvorrichtung in einer Ausführungsform, rechts mit und links ohne die Welle;
- **Figur 5**: einen schematischen Schnitt durch eine erfindungsgemäße Bodenbearbeitungsvorrichtung in einer anderen Ausführungsform, rechts mit und links ohne die Welle;
- **Figur 6**: einen schematischen Schnitt durch eine erfindungsgemäße Bodenbearbeitungsvorrichtung in einer weiteren Ausführungsform, rechts mit und links ohne die Welle;
- **Figur 7**: eine perspektivische Darstellung eines Federarms einer Aus- führungsform ähnlich Figur 4;
- **Figur 8**: eine Welle für eine Ausführungsform ähnlich Figur 4;
- **Figur 9**: eine perspektivische Darstellung einer Bodenbearbeitungs- vorrichtung ähnlich Figur 4;
- **Figur 10**: eine Ansicht ähnlich Figur 4;
- **Figur 11**: eine Seitenansicht auf eine Bodenbearbeitungsvorrichtung gemäß Figur 9;
- **Figur 12**: eine schematische perspektivische Darstellung eines Federarms für eine Bodenbearbeitungsvorrichtung ähnlich Figur 5;
- **Figur 13**: eine Welle für eine Bodenbearbeitungsvorrichtung entsprechend Figur 5;
- **Figur 14**: eine perspektivische Darstellung einer Bodenbearbeitungs- vorrichtung entsprechend Figur 5;
- **Figur 15**: eine Ansicht ähnlich Figur 5;
- **Figur 16**: eine Seitenansicht auf eine Bodenbearbeitungsvorrichtung gemäß Figur 14;
- **Figur 17**: eine schematische perspektivische Ansicht auf einen Federarm für eine Bodenbearbeitungsvorrichtung nach Figur 6;
- **Figur 18**: eine Welle für eine Bodenbearbeitungsvorrichtung entsprechend Figur 6;
- **Figur 19**: eine perspektivische Darstellung einer Bodenbearbeitungs- vorrichtung entsprechend Figur 6;
- **Figur 20**: eine Ansicht ähnlich Figur 6;
- **Figur 21**: eine Seitenansicht auf eine Bodenbearbeitungsvorrichtung gemäß Figur 19;
- **Figur 22**: eine perspektivische Darstellung eines Ausschnittes aus einer Bodenbearbeitungsvorrichtung entsprechend Figur 1 oder Figur 5;
- **Figur 23**: eine Darstellung ähnlich Figur 1 für eine andere Ausführungsform;
- **Figur 24**: eine Ansicht auf die Ausführungsform aus Figur 23 aus Achsrichtung; und
- **Figur 25**: eine Seitenansicht auf die Ausführungsform aus Figur 23.

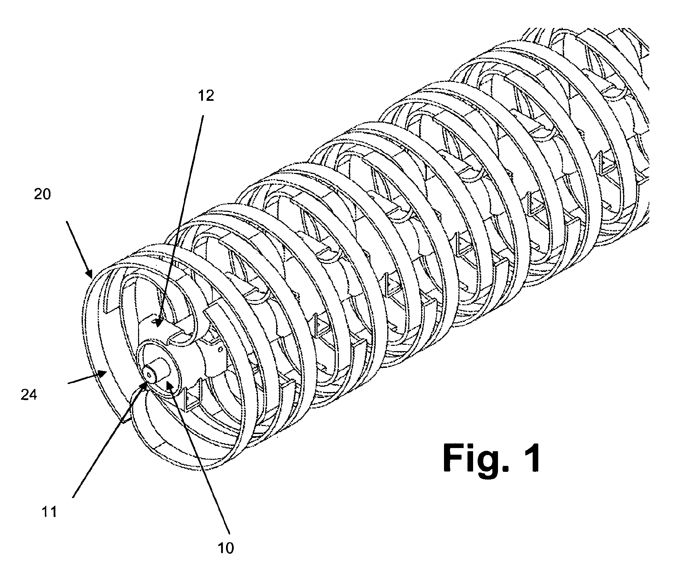

Eine in der **Figur 1** perspektivisch dargestellte erfindungsgemäße Bodenbearbeitungsvorrichtung besitzt eine Welle 10 mit einer Achse 11. An der Welle 10 sind eine Reihe von Trägerkörpern 12 befestigt. Diese Trägerkörper 12 sind längs der Achse in meist regelmäßigen Abständen vorgesehen. Jeder Trägerkörper 12 nimmt einen Federarm 20 auf.

Die Federarme 20 beginnen mit einem ersten Endabschnitt 21 in oder an dem Trägerkörper 12. Von dort verlaufen sie in einem Bogen nach außen bis zu einem Endabschnitt 24.

Weitere Elemente der Bodenbearbeitungsvorrichtung wie beispielsweise Schare, Grubber, etc. sind hier und in den weiteren Figuren zur Verdeutlichung der Erfindung weggelassen.

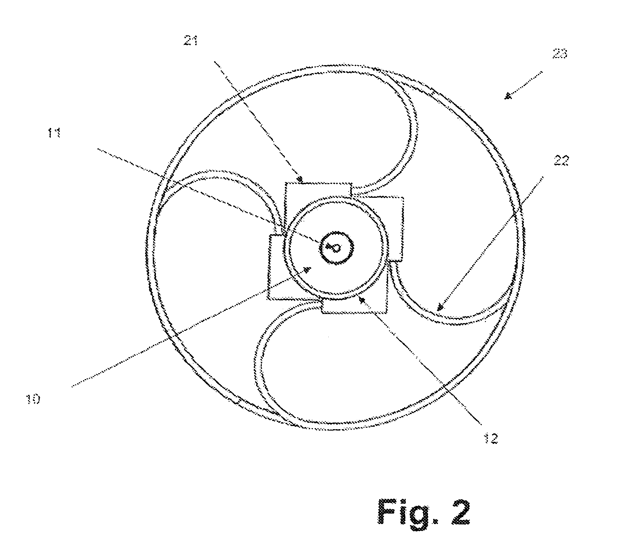

In der **Figur 2** kann man aus Achsrichtung der Achse 11 auf die Bodenbearbeitungsvorrichtung in der Figur 1 blicken. Dabei sieht man, dass die Federarme 20 mit ihrem an dem jeweiligen Trägerkörper 12 befestigten Endabschnitt 21 tangential zur Welle 10 beginnen. Möglich ist auch ein parallel zu einer Tangente an der Welle 10 verlaufender Beginn in oder an dem Trägerkörper 12.

Von diesem Endabschnitt 21 aus setzt sich der Federarm 20 in einem weiteren Abschnitt 22 fort. Der Abschnitt 22 ist sanft gekrümmt und verläuft nach außen mit einem sich langsam, aber stetig vergrößernden Krümmungsradius. Er geht schließlich in einen Abschnitt 23 über, der einen Umkreis um die Achse 11 der Welle 10 bildet.

Wie man bei einem Blick in die Figur 1 sieht, ist dieser Umkreis nicht geschlossen, sondern endet schließlich in einem weiteren Endabschnitt 24.

In der Ausführungsform in den Figuren 1 und 2 bilden zwei Federarme 20 eine Art Ringsegment. Das Ringsegment besitzt als Mittelpunkt die Achse 11, während der fast geschlossene Ring von den Abschnitten 23 und 24 der beiden Federarme 20 gebildet wird.

Durch die Vielzahl der in der Figur 1 erkennbaren Ringsegmente entsteht eine Art Walze. Diese Walze kann auf dem Boden ablaufen, wenn sich die Bodenbearbeitungsvorrichtung quer zur Achse 11 bewegt und sich dabei die Welle 10 um die Achse 11 dreht und somit die Federarme 20 auf dem (nicht dargestellten) Erdboden abläuft.

Befinden sich auf dem Erdboden Steine oder andere Hindernisse, so werden die Federarme 20 elastisch weggedrückt und weichen dem Hindernis aus. Andererseits bieten die Federarme 20 einen Widerstand und zerdrücken dadurch Erdklumpen und vergleichmäßigen und verdichten den Erdboden.

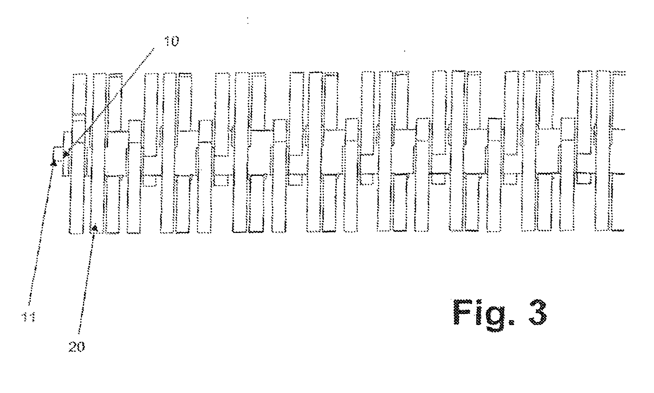

In der **Figur 3** sieht man, dass die Federarme 20 in Richtung der Achse 11 auf der Welle 10 so angeordnet sind, dass die Trägerkörper 12 jeweils um einen Winkel von 90° zueinander versetzt sind, so dass immer andere Positionen der Federarme 20 bei einem bestimmten Drehwinkel der Welle 10 um die Achse 11 auf dem Boden aufliegen.

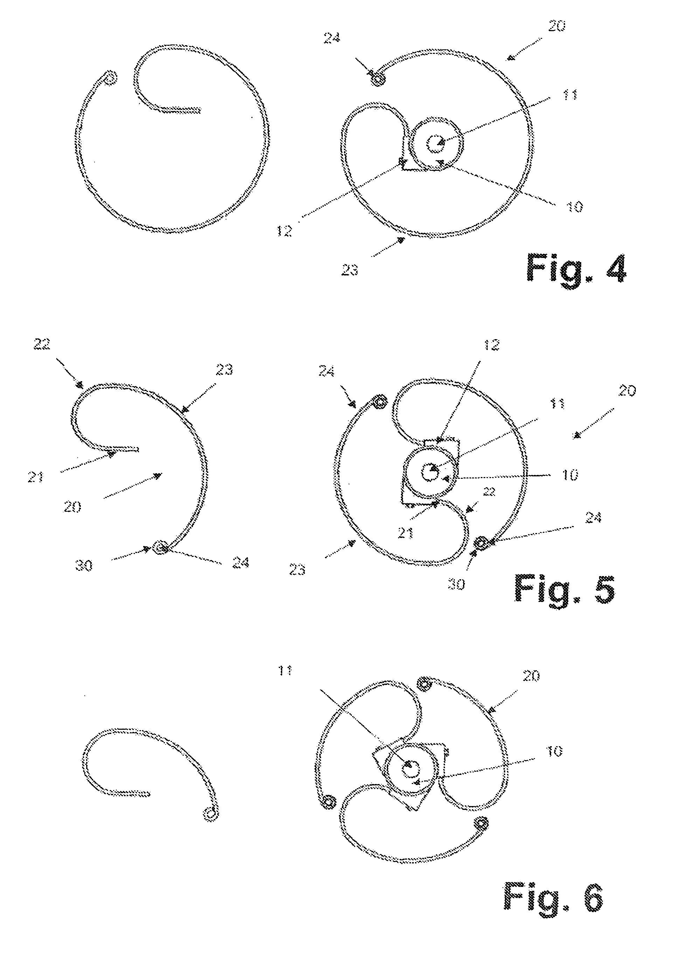

Betrachtet man sich nun die Details, so ist in den Figuren 4 bis 6 schematisch dargestellt, dass es mehrere Ausführungsformen für die Federarme gibt.

In der **Figur 4** ist eine Ausführungsform dargestellt, bei der ein Ringsegment nur aus einem Federarm 20 gebildet wird. Der Federarm 20 beginnt auch hier an oder in dem Trägerkörper 12 auf der Welle 10 mit der Achse 11. Er verläuft dann in einem Halbbogen mit sich langsam vergrößerndem Radius als Abschnitt 22 bis nach außen zu einem Abschnitt 23, der weitgehend den Umkreis um die Achse 11 bildet.

In der linken Hälfte der Figur 4 ist der Federarm 20 allein unter Weglassung der Welle 10 und des Trägerkörpers 12 dargestellt, zur Verdeutlichung hier spiegelsymmetrisch.

In der **Figur 5** ist eine Ausführungsform dargestellt, bei der ein Ringsegment durch zwei Federarme 20 gebildet wird, also entsprechend etwa der Ausführungsform in den Figuren 1 bis 3.

Man sieht, wie sich hier die beiden Trägerkörper 12 diametral gegenüber außen auf der Welle 10 mit der Achse 11 befinden. Der Aufbau ist ähnlich, allerdings nimmt jeder Federarm hier nur nicht ganz die Hälfte des Umkreises des Ringsegmentes ein.

In der **Figur 6** ist eine dritte Ausführungsform schematisch veranschaulicht. Hier wird ein Ringsegment von drei Federarmen 20 gebildet. Die Trägerkörper 12 sind hier jeweils um 120° versetzt außen auf der Welle 10 mit der Achse 11 angeordnet. Auch hier beginnt der erste Endabschnitt 21 eines jeden Federarmes 20 in einer Tangente an der Welle 10 und geht dann in einen Abschnitt 22 über. Den Verlauf des Federarmes 20 separat sieht man wiederum in der linken Hälfte der Figur 6.

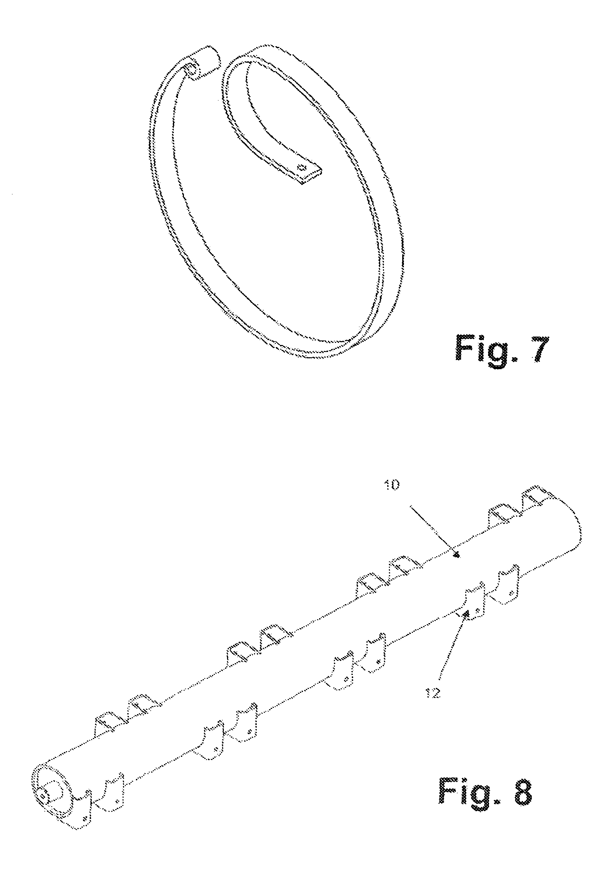

In der **Figur 7** sieht man den Federarm aus der Figur 4 auf der linken Seite perspektivisch dargestellt.

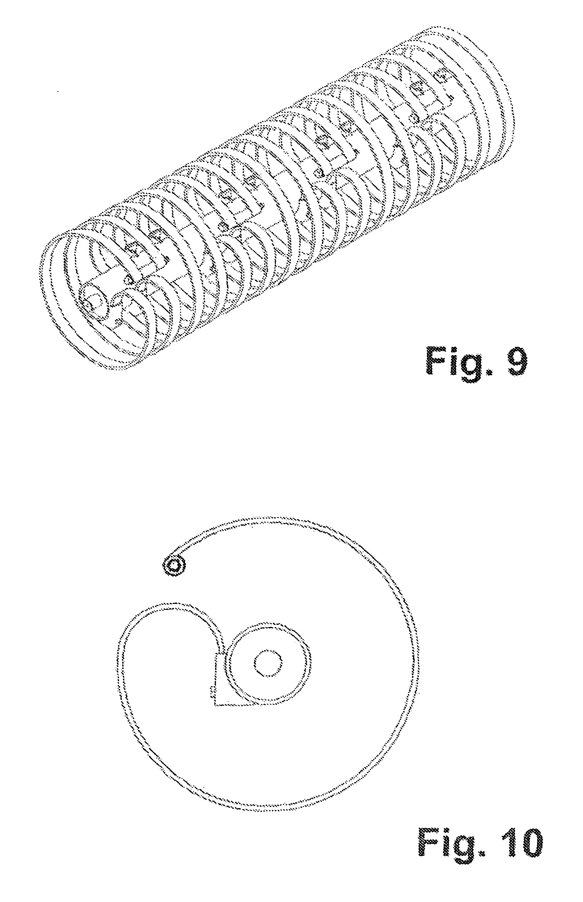

In der **Figur 8** ist eine hierzu passende Welle 10 zu sehen, auf der auch schon die Trägerkörper 12 angeordnet sind, um die in dieser Ausführungsform jeweils um 180° zueinander versetzten Federarme 20 aufzunehmen. Diese sind in der Figur 8 weggelassen, dafür aber in der **Figur 9** zusammen mit der Welle 10 dargestellt.

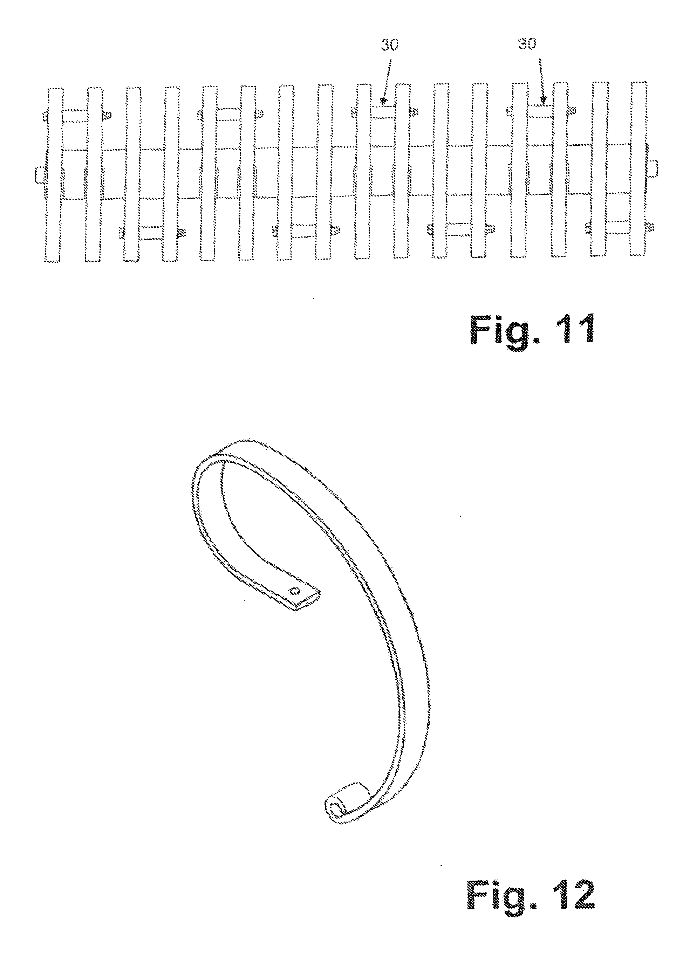

Die **Figur 10** entspricht der rechten Hälfte der Figur 4 und in der **Figur 11** sieht man die Bodenbearbeitungsvorrichtung aus Figur 9 von der Seite. In der Figur 11 ist außerdem zu erkennen, dass paarweise je zwei Federarme 20 mittels einer Befestigungsmöglichkeit 30 miteinander verbunden sind. Diese Befestigungsmöglichkeit 30 ist benachbart zum Endabschnitt 24 eines Federarms vorgesehen und führt zu einer erhöhten Stabilität der Gesamtkonstruktion.

Die Bezugszeichen sind in diesen Figuren weitgehend fortgelassen, um einen freieren Anblick der Konstruktion zu erlauben.

In der **Figur 12** sieht man eine perspektivische Darstellung auf den Federarm 20 aus der linken Hälfte der Figur 5.

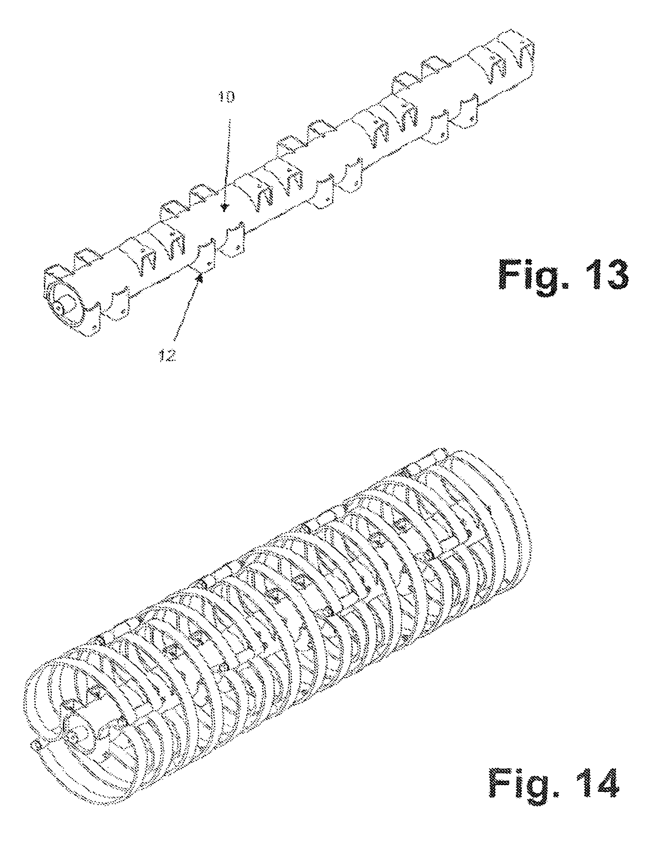

Entsprechend ist in der **Figur 13** eine Welle 10 mit Trägerkörpern 12 für die Aufnahme von Federarmen entsprechend der Figur 12 oder der Figur 5 perspektivisch zu sehen, unter Fortlassung dieser Federarme.

In der **Figur 14** ist perspektivisch eine Anordnung aus der Welle 10 der Figur 13 mit den Federarmen 20 dargestellt, bei der jeweils paarweise die Federarme 20 miteinander verbunden sind und zueinander um 90° versetzt sind.

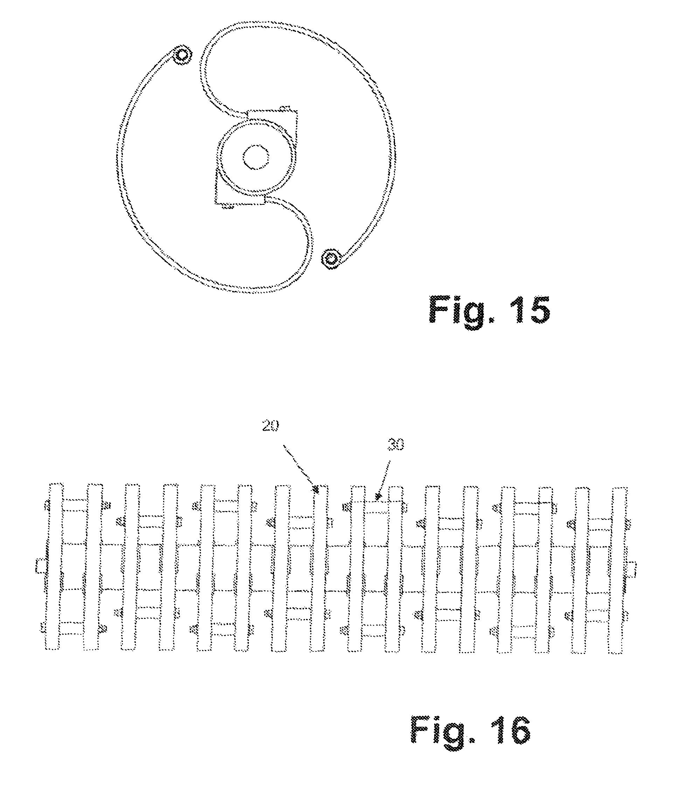

In der **Figur 15** ist eine Darstellung ähnlich der Figur 5 in der rechten Hälfte zu sehen.

**Figur 16** stellt eine Seitenansicht auf die Ausführungsform der Figur 14 dar, wobei wiederum mit Befestigungsmöglichkeiten 30 paarweise die Federarme 20 verbunden sind.

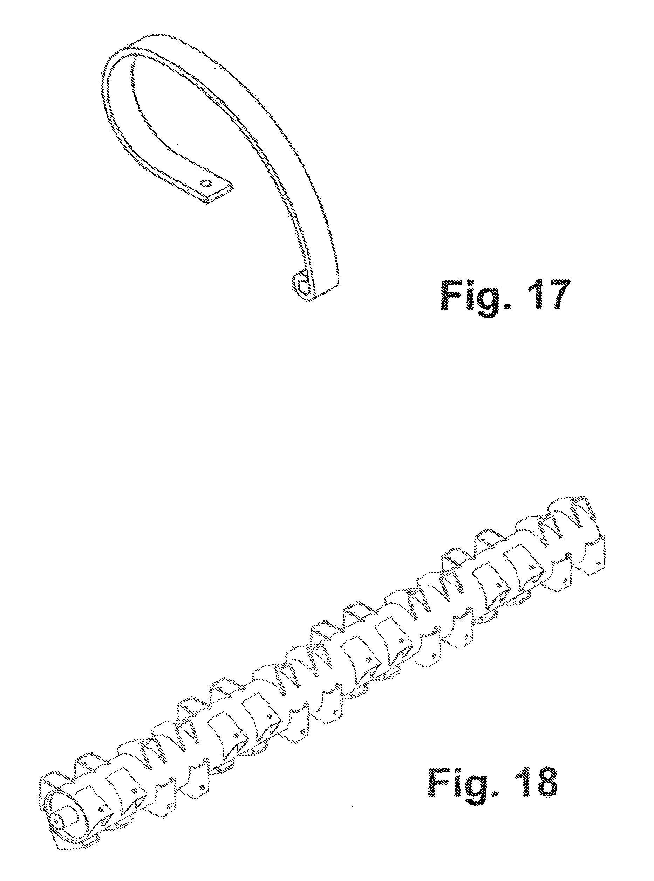

**Figur 17** zeigt einen Federarm in perspektivischer Anordnung, der der linken Seite der Figur 6 entspricht.

**Figur 18** zeigt eine zugehörige Welle 10 mit Trägerkörpern 12, die hier so zueinander versetzt sind, wie dies in der Figur 6 in der rechten Hälfte zu erkennen ist.

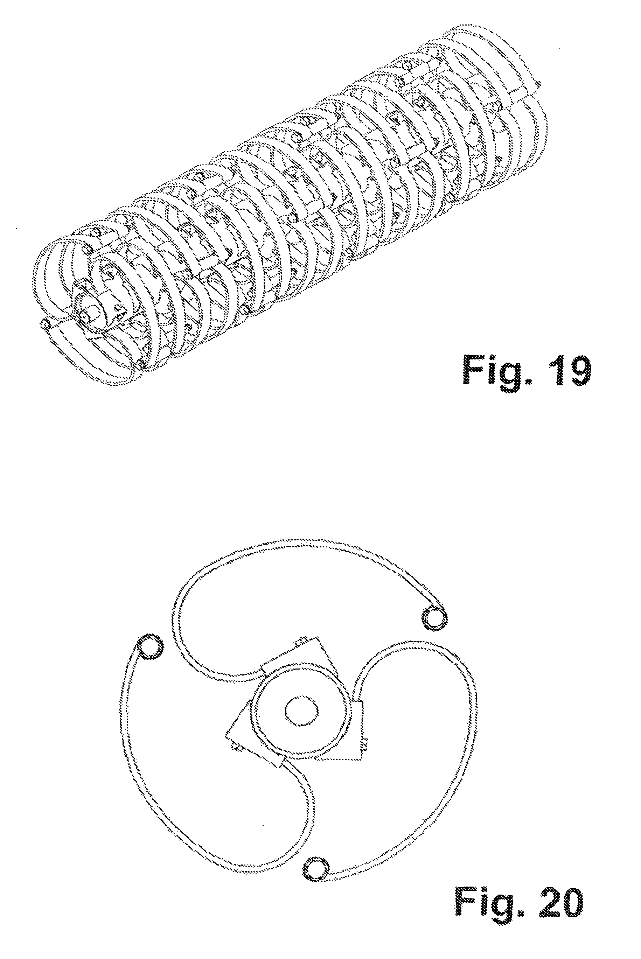

**Figur 19** zeigt die Bodenbearbeitungsvorrichtung der Figuren 17 und 18 in perspektivischer Darstellung. Je drei Federarme 20 bilden ein Ringsegment um die Welle 10 mit der Achse 11.

In der **Figur 20** ist eine Darstellung ähnlich der rechten Hälfte aus der Figur 6 zu sehen.

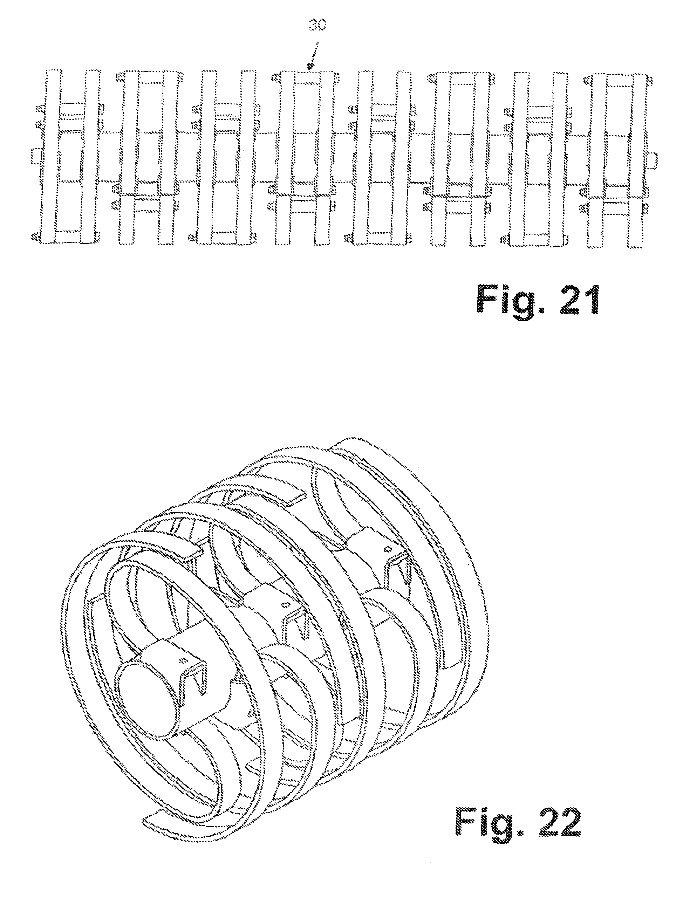

**Figur 21** zeigt eine Seitenansicht auf die Ausführungsform aus der Figur 19, wieder mit paarweise angeordneten Befestigungsmöglichkeiten 30.

In der **Figur 22** ist eine vergrößerte Darstellung auf eine besonders bevorzugte Ausführungsform mit zwei Federarmen 20 je Ringsegment um die Welle 10 dargestellt. Man sieht drei Ringsegmente, bei denen die Trägerkörper 12 jeweils um 90° zueinander versetzt sind.

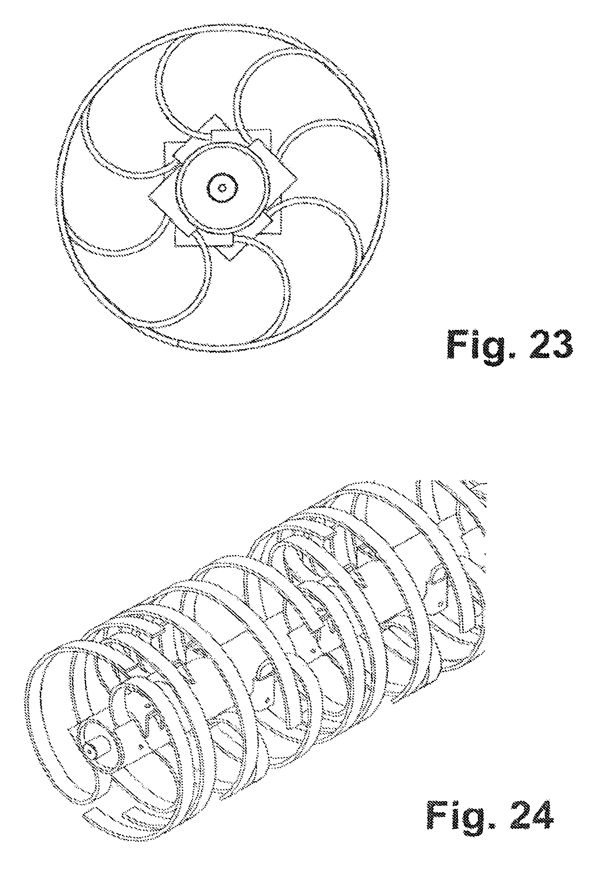

In der **Figur 23** ist eine Darstellung gezeigt, die der Darstellung in der Figur 2 ähnelt, jedoch eine leicht modifizierte Ausführungsform wiedergibt. Die Trägerkörper 12 sind hier jeweils um 45° zueinander versetzt.

Dies ist noch deutlicher in der **Figur 24** zu erkennen, die eine Ansicht auf die Ausführungsform aus der Figur 23 in Achsrichtung der Achse 11 zeigt.

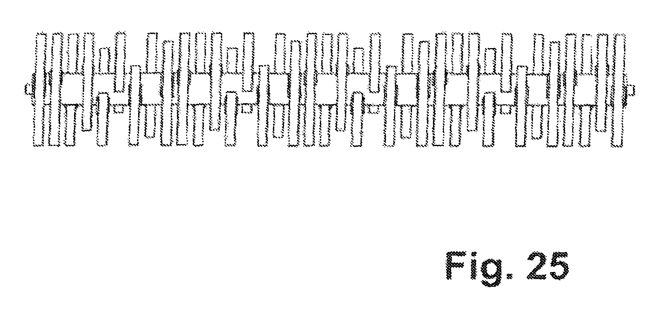

In der **Figur 25** ist eine Seitenansicht der Ausführungsform aus der Figur 23 zu sehen.

### Bezugszeichenliste

- 10: horizontale, drehbare Welle
- 11: Achse der Welle 10
- 12: Trägerkörper an der Welle 10

- 20: Federarm
- 21: Abschnitt des Federarms am Trägerkörper 12, erster Endabschnitt
- 22: Abschnitt des Federarms beim Übergang zum Umkreis
- 23: Abschnitt des Federarms auf dem Umkreis
- 24: Endabschnitt des Federarms, zugleich freies Ende

- 30: Befestigungsmöglichkeit am Endabschnitt des Federarms

## Patentansprüche

1. Bodenbearbeitungsvorrichtung,
mit einer horizontalen, drehbaren Welle (10) mit einer Achse (11),
mit einem oder mehreren an der Welle (10) angeordneten Trägerkörpern (12),
mit mehreren sichelförmigen Federarmen (20), die mit einem Endabschnitt (21) in oder an dem oder den Trägerkörpern (12) befestigt sind und mit dem anderen Endabschnitt (24) ein freies Ende bilden, wobei der an das freie Ende (24) angrenzende Abschnitt (23) einen Teil eines Umkreises um die Achse (11) bildet und federnd nachgiebig ist,
**dadurch gekennzeichnet,**
**dass** die sichelförmigen Federarme (20) von der Welle (10) aus in einer von einer radialen Richtung abweichenden Richtung nach außen ragen und im weiteren Verlauf in einer Krümmung in den Abschnitt übergehen, der einen Teil des Umkreises um die Achse (11) bildet, und
**dass** jeder Federarm (20) an seinem Trägerkörper (12) so befestigt ist, dass sein erster Endabschnitt (21) tangential zur Welle (10) oder parallel dazu verläuft.

2. Bodenbearbeitungsvorrichtung nach Anspruch 1,
**dadurch gekennzeichnet,**
**dass** die Federarme (20) so ausgebildet sind, dass der Radius ihrer Krümmung von innen nach außen stetig zunimmt.

3. Bodenbearbeitungsvorrichtung nach einem der vorstehenden Ansprüche,
**dadurch gekennzeichnet,**
**dass** jeweils zwei Federarme (20) miteinander einen fast geschlossenen Ring bilden.

4. Bodenbearbeitungsvorrichtung nach einem der vorstehenden Ansprüche,
**dadurch gekennzeichnet,**
**dass** die Federarme (20) aus Federstahl bestehen.

5. Bodenbearbeitungsvorrichtung nach einem der vorstehenden Ansprüche,
**dadurch gekennzeichnet,**
**dass** die Federarme (20) einen profilierten Querschnitt bilden.

6. Bodenbearbeitungsvorrichtung nach einem der vorstehenden Ansprüche,
**dadurch gekennzeichnet,**
**dass** von mehreren in Achsrichtung nebeneinander angeordneten Federarmen (20) mehrere gruppenweise nebeneinanderliegende Federarme (20) eine Befestigungsmöglichkeit (30) zur Verbindung der gruppenweise benachbarten Federarme aufweisen.

7. Bodenbearbeitungsvorrichtung nach Anspruch 6,
**dadurch gekennzeichnet,**
**dass** gruppenweise miteinander verbundene Federarme (20) relativ zur nächsten Gruppe verbundener Federarme um 90° relativ zur Achse (11) versetzt sind.

8. Bodenbearbeitungsvorrichtung nach Anspruch 6 oder 7,
**dadurch gekennzeichnet,**
**dass** die Gruppen der miteinander verbundenen Federarme (20) je zwei Federarme aufweisen.

9. Bodenbearbeitungsvorrichtung nach einem der Ansprüche 6 bis 8,
**dadurch gekennzeichnet,**
**dass** die Verbindung der gruppenweise benachbarten Federarme (20) an den Befestigungsmöglichkeiten (30) stabähnlich aufgebaut ist.

10. Bodenbearbeitungsvorrichtung nach einem der vorstehenden Ansprüche,
**dadurch gekennzeichnet,**
**dass** der Abstand der Federarme (20) voneinander in Richtung der Achse (11) weniger als 150 Millimeter, insbesondere etwa 125 Millimeter beträgt.

11. Bodenbearbeitungsvorrichtung nach einem der vorstehenden Ansprüche,
**dadurch gekennzeichnet,**
**dass** die Blattbreite jedes Federarmes (20) etwa 45 Millimeter beträgt.

12. Bodenbearbeitungsvorrichtung nach einem der vorstehenden Ansprüche,
**dadurch gekennzeichnet,**
**dass** die Federarme (20) auswechselbar an ihren Trägerkörpern (12) befestigt sind.

## Claims

1. A soil cultivation device,
having a horizontal, rotatable shaft (10) with an axle (11), having one or more carrier bodies (12) arranged on the shaft (10),
having a plurality of sickle-shaped spring arms (20), which are fastened with one end portion (21) in or on the carrier body/bodies (12) and, with the other end portion (24), form a free end, the portion (23) adjacent the free end (24) forming part of a circumscribed circle about the axle (11) and being resiliently yielding,
**characterised in that**
the sickle-shaped spring arms (20) project out from the shaft (10) in a direction other than a radial direction and continue onward in a curved profile to transition into the portion which forms part of the circumscribed circle about the axle (11), and
**in that** each spring arm (20) is fastened to the carrier body (12) thereof in such a manner that the first end portion (21) thereof extends tangentially to the shaft (10) or parallel thereto.

2. A soil cultivation device according to claim 1, **characterised in that** the spring arms (20) are configured such that the radius of the curvature thereof increases continuously from the inside outwards.

3. A soil cultivation device according to one of the preceding claims, **characterised in that** in each case two spring arms (20) form an almost closed ring with one another.

4. A soil cultivation device according to one of the preceding claims, **characterised in that** the spring arms (20) consist of spring steel.

5. A soil cultivation device according to one of the preceding claims, **characterised in that** the spring arms (20) form a profiled cross-section.

6. A soil cultivation device according to one of the preceding claims, **characterised in that**, of a plurality of spring arms (20) arranged adjacent one another in the axial direction, a plurality of spring arms (20) grouped adjacent one another comprise a fastening means (30) for connecting the adjacently grouped spring arms.

7. A soil cultivation device according to claim 6, **characterised in that** spring arms (20) connected to one another in a group are offset relative to the next group of connected spring arms by 90° relative to the axle (11).

8. A soil cultivation device according to claim 6 or claim 7, **characterised in that** the groups of spring arms (20) connected to one another in each case comprise two spring arms.

9. A soil cultivation device according to one of claims 6 to 8, **characterised in that** the connection of adjacently grouped spring arms (20) on the fastening means (30) is of a bar-like structure.

10. A soil cultivation device according to one of the preceding claims, **characterised in that** the spring arms (20) are spaced apart from one another in the direction of the axle (11) by less than 150 millimetres, in particular by approx. 125 millimetres.

11. A soil cultivation device according to one of the preceding claims, **characterised in that** the leaf width of each spring arm (20) is approx. 45 millimetres.

12. A soil cultivation device according to one of the preceding claims, **characterised in that** the spring arms (20) are fastened replaceably to the carrier bodies (12) thereof.

## Revendications

1. Dispositif de travail au sol,
avec un arbre rotatif horizontal (10) présentant un axe (11),
avec un ou plusieurs corps porteurs (12) disposés sur l'arbre (10),
avec plusieurs bras de ressort (20) falciformes qui sont fixés avec une section d'extrémité (21) dans ou sur le ou les corps porteurs (12) et forment avec l'autre section d'extrémité (24) une extrémité libre, la section (23) contiguë à l'extrémité libre (24) formant une partie d'un cercle autour de l'axe (11) et étant flexible élastiquement,
**caractérisé en ce que**,
les bras de ressort (20) falciformes dépassent vers l'extérieur depuis l'arbre (10) dans un sens divergeant d'un sens radial et passent ensuite dans une courbure de la section qui forme une partie du cercle autour de l'axe (11), et
chaque bras de ressort (20) est fixé sur son corps porteur (12) de sorte que sa première section d'extrémité (21) s'étende tangentiellement à l'arbre (10) ou parallèlement à celui-ci.

2. Dispositif de travail au sol selon la revendication 1,
**caractérisé en ce que**,
les bras de ressort (20) sont réalisés de sorte que le rayon de leur courbure augmente en permanence de l'intérieur vers l'extérieur.

3. Dispositif de travail au sol selon l'une quelconque des revendications précédentes,
**caractérisé en ce que**,
respectivement deux bras de ressort (20) forment ensemble un anneau presque fermé.

4. Dispositif de travail au sol selon l'une quelconque des revendications précédentes,
**caractérisé en ce que**,
les bras de ressort (20) sont en acier à ressorts.

5. Dispositif de travail au sol selon l'une quelconque des revendications précédentes,
**caractérisé en ce que**,
les bras de ressort (20) forment une section transversale profilée.

6. Dispositif de travail au sol selon l'une quelconque des revendications précédentes,
**caractérisé en ce que**,
plusieurs bras de ressort (20) disposés les uns à côté des autres par groupes présentent une possibilité de fixation (30) pour la liaison des bras de ressort contigus par groupes parmi plusieurs bras de ressort (20) disposés les uns à côté des autres dans le sens axial.

7. Dispositif de travail au sol selon la revendication 6,
**caractérisé en ce que**,
des bras de ressort (20) reliés ensemble par groupes sont décalés par rapport au prochain groupe de bras de ressort reliés de 90° par rapport à l'axe (11).

8. Dispositif de travail au sol selon la revendication 6 ou 7,
**caractérisé en ce que**,
les groupes des bras de ressort (20) reliés ensemble présentent chacun deux bras de ressort.

9. Dispositif de travail au sol selon l'une quelconque des revendications 6 à 8,
**caractérisé en ce que**,
la liaison des bras de ressort (20) contigus par groupes est constituée comme une barre sur les possibilités de fixation (30).

10. Dispositif de travail au sol selon l'une quelconque des revendications précédentes,
**caractérisé en ce que**,
la distance entre les bras de ressort (20) en direction de l'axe (11) s'élève à moins de 150 millimètres, en particulier environ à 125 millimètres.

11. Dispositif de travail au sol selon l'une quelconque des revendications précédentes,
**caractérisé en ce que**,
la largeur de lame de chaque bras de ressort (20) s'élève environ à 45 millimètres.

12. Dispositif de travail au sol selon l'une quelconque des revendications précédentes,
**caractérisé en ce que**,
les bras de ressort (20) sont fixés de manière interchangeable sur leurs corps porteurs (12).
